# EUROPÄISCHE PATENTSCHRIFT

(11) **EP 3 539 762 B1**
(45) Veröffentlichungstag und Bekanntmachung des Hinweises auf die Patenterteilung: **10.03.2021**
(21) Anmeldenummer: 19151108.8
(22) Anmeldetag: 10.01.2019
(51) Int. Cl.: B29D 30/54, B05D 5/10, B29C 65/48, C09J 5/00

(54) **VERFAHREN ZUM DAUERHAFTEN VERBINDEN VULKANISIERTER GUMMIBAUTEILE UND FAHRZEUGREIFEN**
METHOD FOR PERMANENTLY CONNECTING VULCANIZED RUBBER COMPONENTS AND VEHICLE TYRES
PROCÉDÉ DE RACCORDEMENT PERMANENT DES COMPOSANTS EN CAOUTCHOUC VULCANISÉS ET PNEUMATIQUES DE VÉHICULE

(30) Priorität: 15.03.2018 DE 102018203965
(43) Veröffentlichungstag der Anmeldung: 18.09.2019
(73) Patentinhaber: Continental Reifen Deutschland GmbH, 30165 Hannover (DE)
(72) Erfinder: Kurz, Martin, 30161 Hannover (DE); De Risi, Francesca Romana, 30161 Hannover (DE); Romano, Gianfredo, 30459 Hannover (DE)
(74) Vertreter: Continental Corporation

(56) Entgegenhaltungen:
- WO-A1-2016/135264
- WO-A1-2016/196410
- CH-A- 495 837
- DE-A1- 2 420 220
- DE-A1- 3 317 345

## Beschreibung

Die Erfindung betrifft ein Verfahren zum dauerhaften Verbinden vulkanisierter Gummibauteile. Ferner betrifft die Erfindung einen Fahrzeugreifen, insbesondere einen Fahrzeugluftreifen, der nach dem Verfahren hergestellt ist.

Verfahren zum dauerhaften Verbinden von vulkanisierten Gummibauteilen sind aus dem Stand der Technik bekannt. Als Klebstoffe für das Verbinden von Gummibauteilen werden üblicherweise Cyanacrylat-Klebstoffe verwendet.

Ein Verfahren zum dauerhaften Verbinden von Gummibauteilen ist z. B. die Kaltrunderneuerung von Fahrzeugreifen. Bei diesem Verfahren wird üblicherweise eine Verbindungskautschukmischung zum Verbinden der Bauteile verwendet.

Zur Schonung von Umwelt und Ressourcen kann man Fahrzeugreifen, und bei diesen vor allem LKW-Reifen, runderneuern. Beim Prozess der Runderneuerung wird bei dem abgefahrenen Reifen die abgenutzte Lauffläche maschinell abgeraut (oder mit Messern abgeschält), eine neue Lauffläche aufgelegt und anschließend vulkanisiert. Diese Methode ist in der Herstellung bis zu einem Drittel preisgünstiger als die Herstellung eines Neureifens, da der Reifentorus mit Wulst, Seitenwand, Karkasse und Gürtel wiederverwendet werden kann.

Es sind derzeit zwei Verfahren zur Runderneuerung in der Anwendung.
Die erste ist die sogenannte Heißrundereneuerung, bei der ein neuer, unvulkanisierter Laufstreifen ohne Profil auf den abgerauten Altreifen aufgelegt wird und im Anschluss durch Vulkanisation in einer Form unter Druck bei Temperaturen um die 150 °C der Laufstreifen mit dem Altreifen zusammenvulkanisiert und gleichzeitig profiliert wird.

Das zweite Verfahren ist die sogenannte Kaltrunderneuerung. Bei der Kaltrunderneuerung wird nach dem Entfernen der alten Lauffläche eine vulkansierbare Kautschukmischung, die sogenannte Verbindungskautschukmischung (Bindekautschuk, engl. cushion gum) mit Hilfe einer Extrudiervorrichtung aufgebracht. Darauf wird ein bereits vulkanisierter und profilierter Laufstreifen appliziert. In einem darauf folgenden Vulkanisiationsschritt reagiert dann die Verbindungskautschukmischung und stellt die Verbindung aus (erneuerter) Karkasse und (neuem) Laufstreifen her. Dieser letzte Vulkanisationsschritt, der notwendig ist um die Verbindungskautschukmischung abreagieren zu lassen und häufig in einem Autoklaven bei Temperaturen von ca. 120 °C stattfindet, belastet jedoch thermisch alle bereits ausvulkanisierten Komponenten des Reifens, also unter anderem die Karkasse und den Laufstreifen. Daher ist man bestrebt, alternative Verfahren aufzufinden, die auf diesen letzten Vulkanisationsschritt verzichten. Ferner wird bei dem letzten Vulkanisationsschritt viel Energie verbraucht und die nötigen Apparaturen erfordern relativ hohe Investitionen.

Zur Vermeidung des letzten Vulkanisationsschrittes bei der Kaltrunderneuerung ist es aus der DE 601 10 697 T2 bekannt, bei der Kaltrunderneuerung von Fahrzeugreifen einen Klebstoff basierend auf einem speziellen Copolymer, das Harnstoffgruppen oder Urethangruppen aufweist, zu verwenden. Dabei werden der vernetzte (vulkanisierte) Laufstreifen und eine vernetzte Karkasse mit dem Klebstoff bei Umgebungstemperatur verbunden.

Auch aus der WO 2016/196410 A1 ist es bekannt, bei der Kaltrunderneuerung von Fahrzeugreifen einen Klebstoff in Form eines Musters, beispielsweise in Form paralleler Linien, auf die abgeraute Karkasse aufzubringen und den vulkanisierten neuen Laufstreifen darauf aufzulegen und mit der Karkasse ohne Wärmezufuhr zu verkleben. Vorzugsweise wird als Klebstoff ein Cyanacrylat- Klebstoff verwendet.

Bei der Verwendung von Cyanacrylat-Klebstoffen zum dauerhaften Verbinden von Gummibauteilen hat es sich als nachteilig erwiesen, dass Klebstoffe auf Cyanacrylatbasis in der Regel anfällig auf einen andauernden Kontakt mit Wasser reagieren. Daher kann es bei dauerndem Kontakt mit Wasser zu einer Lösung der verbundenen Bauteile insbesondere an den Rändern kommen.

Weitere Verfahren zum Verbinden vulkanisierter Gummibauteile sind in WO 2016/135264 A1 und CH 495 837 beschrieben.

Der vorliegenden Erfindung liegt die Aufgabe zugrunde, ein Verfahren zum dauerhaften Verbinden vulkanisierter Gummibauteile bereit zu stellen, das einfach und kostengünstig durchgeführt werden kann und auch bei ständigem Kontakt mit Wasser eine dauerhafte Verbindung gewährleistet.

Gelöst wird die Aufgabe erfindungsgemäß durch ein Verfahren mit zumindest folgenden Schritten:
- Aufbringen eines ersten, wasserempfindlichen Klebstoffes auf zumindest einen Bereich der zu verbindenden Gummibauteile,
- Aufbringen eines zweiten, wasserunempfindlichen Klebstoffes an den nach außen weisenden Rändern des Bereiches des ersten Klebstoffes,
- Zusammenpressen der zu verbindenden Bauteile und
- Ausreagierenlassen der Klebstoffe bei einer Temperatur von weniger als 50 °C.

Durch die Verwendung von Klebstoffen kann bei dem Verfahren auf kosten- und energieintensive nachgeschaltete Vulkanisationsverfahren verzichtet werden, wodurch auch eine zusätzliche thermische Belastung der bereits vulkanisierten Gummibauteile entfällt. Dadurch, dass an den nach außen weisenden Rändern des ersten, wasserempfindlichen Klebstoffes ein zweiter, wasserunempfindlicher Klebstoff vorgesehen ist, gelingt es, den ersten Klebstoff vor dem negativen Einfluss des Wassers zu schützen. Es wird eine funktionale Trennung der verschiedenen Klebstoffe vorgenommen. Die mechanische Belastung der Klebstoffverbindung kann im Wesentlichen vom ersten Klebstoff aufgenommen werden, während die Abdichtung gegen Wasser und ggf. andere chemische Substanzen von dem zweiten Klebstoff übernommen wird. Auf diese Weise wird eine möglichst dauerhafte Verbindung der Bauteile auch bei ständigem Kontakt mit Wasser gewährsleistet.

Das Aufbringen der Klebstoffe kann nach bekannten Verfahren, wie Sprühen oder Streichen, erfolgen.

Als vorteilhaft hat es sich erwiesen, wenn der erste, wasserempfindliche Klebstoff ein Cyanacrylat-Klebstoff ist. Klebstoffe auf der Basis von Cyanacrylat eignen sich besonders gut zum Verbinden von vulkanisierten Gummibauteilen, da sie gut und schnell aushärten, besonders flexibel nach dem Kleben sind, eine hohe Temperaturstabilität aufweisen und stark verkleben. Als Cyanacrylat-Klebstoffe können solche mit unterschiedlichen Basis-Monomeren, wie Methylester, Ethylester, Butylester oder Alkoxyester, eingesetzt werden. Vorzugsweise ist das Basis-Monomer Ethylester. Einsetzbar sind beispielsweise Cyanacrylat-Klebstoffe der Cyberbond 2000 Serie der Firma Cyberbond Europe GmbH, Deutschland.

Um besser erkennen zu können, ob der Bereich des ersten Klebstoffes gut vom zweiten Klebstoff umgeben ist, hat es sich als vorteilhaft erwiesen, wenn sich der erste, wasserempfindliche Klebstoff farblich vom zweiten, wasserunempfindlichen Klebstoff unterscheidet. Die farbliche Unterscheidung kann z. B. durch Zudosierung unterschiedlicher, geeigneter Farbstoffe zu den Klebstoffen erfolgen. Auch der Einsatz von Fluoreszenzfarbstoffen fällt im Rahmen der Erfindung unter die farbliche Unterscheidung.

Als zweiter, wasserunempfindlicher Klebstoff können unterschiedlichste dem Fachmann bekannte und mit Gummi verträgliche Klebstoffe eingesetzt werden. Dabei kann es sich sowohl um physikalisch als auch um chemisch härtende Klebstoffe handeln. Gemäß einer vorteilhaften Weiterbildung der Erfindung basiert der zweite, wasserunempfindliche Klebstoff nicht auf Cyanacrylat.

Vorzugsweise ist der zweite, wasserunempfindliche Klebstoff ausgewählt aus der Gruppe bestehend aus Polyurethan-Klebstoffen, Epoxidharz-Klebstoffen, silanvemetzenden Polymerklebstoffe und lösemittelhaltigen Nassklebstoffen. Mit diesen Klebstoffen haben sich die besten Ergebnisse hinsichtlich der Wasserbeständigkeit erzielen lassen. Besonders bevorzugt wird Polyurethan-Klebstoff eingesetzt.

Um die Haftung zwischen den Gummibauteilen zu verbessern, hat es sich als vorteilhaft erwiesen, wenn zumindest eines der zu verbindenden Gummibauteile auf der Verbindungsseite angeraut ist.

Das Ausreagierenlassen der Klebstoffe erfolgt bei einer Temperatur von weniger als 50 °C, dadurch werden bereits vulkanisierte Bauteile kaum thermisch belastet. Bevorzugt erfolgt das Ausreagierenlassen der Klebstoffe ohne zusätzliche Wärmezufuhr. Auf diese Weise wird die thermische Belastung der Bauteile vollständig vermieden und der Energiebedarf wird reduziert. Diese beiden Aspekte haben einen positiven Einfluss auf die Haltbarkeit der verklebten Gummibauteile und auf die Energiekosten. Ferner sind keine zusätzlichen Apparaturen zur Erwärmung erforderlich.

Als besonders vorteilhaft hat sich der Einsatz des erfindungsgemäßen Verfahrens bei der Kaltrunderneuerung von Fahrzeugreifen erwiesen. Die Klebstoffe ersetzen dabei das Bindegummi (Verbindungskautschukmischung) zur Anbindung des vulkanisierten Laufstreifens an die Karkasse des zu erneuernden Altreifens. Es kann dann Energie eingespart werden, da durch den Verzicht auf das Bindegummi keine Vulkanisation mehr erforderlich ist. Ferner kann auf die hohen Investitionen, die bei der Anschaffung von Vulkanisationsapparaturen, wie Autoklaven, nötig wären, verzichtet werden. Der verklebte Bereich ist außen durch den wasserunempfindlichen Klebstoff vor Auflösungserscheinungen durch Wasser geschützt und weist eine gute Haltbarkeit auf.

Gemäß einer vorteilhaften Weiterbildung der Erfindung weist das Verfahren zur Kaltrunderneuerung von Fahrzeugreifen zumindest folgende Schritte auf:
- Entfernen des gesamten Laufstreifens von einem gebrauchten Fahrzeugreifen, so dass die Karkasse mit Wulst, Seitenwand und Gürtel verbleibt,
- Aufbringen eines ersten, wasserempfindlichen Klebstoffes auf den mittleren Bereich der Karkasse oder den mittleren Bereich der Unterseite eines bereits vulkanisierten neuen Laufstreifens über den gesamten Fahrzeugreifenumfang,
- Aufbringen eines zweiten, wasserunempfindlichen Klebstoffes an den radial nach außen weisenden Rändern des Bereiches des ersten Klebstoffes,
- Zusammenpressen von Karkasse und Laufstreifen und
- Ausreagierenlassen der Klebstoffe bei Raumtemperatur.

Ohne zusätzlichen Energie- und Investitionsaufwand können auf diese Weise Fahrzeugreifen nach dem Verfahren der Kaltrunderneuerung hergestellt werden. Außerdem wird durch den Verzicht auf eine anschließende Temperaturbehandlung eine thermische Belastung der bereits vulkanisierten Bauteile des Reifens verhindert. Die aus einer solchen thermischen Belastung resultierenden Nachteile, wie z. B. eine verringerte Haltbarkeit, werden dadurch vermieden.

Das Aufbringen der Klebstoffe kann auf unterschiedliche Art und Weise, wie Sprühen, Streichen usw., erfolgen. Das Aufbringen muss dabei nicht vollflächig erfolgen, sondern kann auch z. B. in Form von Streifen oder Klebepunktengeschehen, wobei sich beim Zusammenpressen der Bauteile die Klebstoffe auf der Fläche verteilen.

Das Verfahren ist sowohl für Vollgummireifen als auch vorzugsweise für Fahrzeugluftreifen einsetzbar.

Ein nach dem vorgenannten Verfahren hergestellter Fahrzeugreifen zeichnet sich durch eine gute und wasserunempfindliche Haftung zwischen Karkasse und Laufstreifen aus. Er ist haltbar und mit geringem Kostenaufwand herstellbar.

Die Erfindung soll nun anhand eines Ausführungsbeispiels näher erläutert werden.

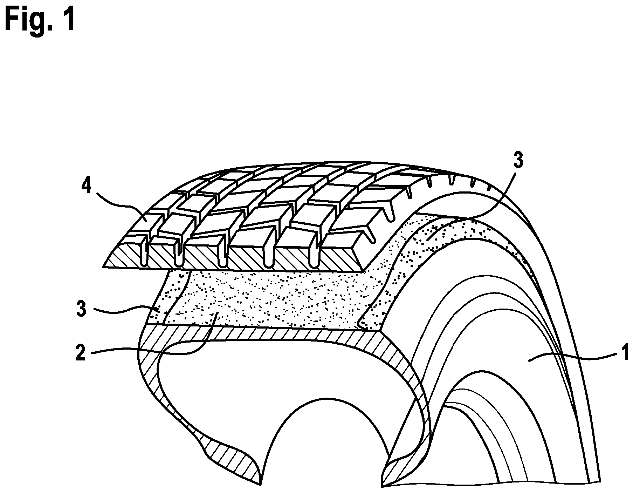

Dabei zeigt die einzige Figur 1 schematisch den Schnitt durch einen Fahrzeugluftreifen bei der Kaltrunderneuerung gemäß der Erfindung.

Auf eine abgeraute Karkasse 1 (mit Wulst, Seitenwand und Gürtel) eines Fahrzeugluftreifens, bei der der alte Laufstreifen durch ein Abrauverfahren entfernt wurde, wurde auf den mittleren Bereich ein Cyanacrylat-Klebstoff 2 durch Streichen über den gesamten Reifenumfang aufgebracht. Der Cyanacrylat-Klebstoff 2 war flexibel, stark und schnell verklebend sowie temperaturbeständig. Der Cyanacrylat-Klebstoff 2 war mit einem Fluoreszenzfarbstoff angefärbt, um die unterschiedlichen Klebstoffbereiche besser unterscheidbar zu machen. An den radial nach außen weisenden Rändern des Bereiches des Cyanacrylat-Klebstoffes 2 wurde ein wasserunempfindlicher Polyurethan-Klebstoff 3 durch Streichen in der Art aufgebracht, dass der wasserunempfindliche Polyurethan-Klebstoff 3 den gesamten Bereich des Cyanacrylat-Klebstoffes 2 umschloss. Im Anschluss wurde ein profilierter und vulkanisierter Laufstreifen 4 auf die mit den Klebstoffen 2 und 3 versehene Karkasse 1 gepresst. Nach dem Ausreagieren der Klebstoffe 2 und 3 erhielt man ohne zusätzliches Erwärmen und weitere Apparaturen einen runderneuerten Fahrzeugluftreifen mit guter Haltbarkeit, insbesondere unter Einwirkung von Wasser und bei hoher dynamischer und thermischer Belastung.

## Patentansprüche

1. Verfahren zum dauerhaften Verbinden vulkanisierter Gummibauteile, **gekennzeichnet durch** zumindest folgende Schritte:
- Aufbringen eines ersten, wasserempfindlichen Klebstoffes (2) auf zumindest einen Bereich der zu verbindenden Gummibauteile,
- Aufbringen eines zweiten, wasserunempfindlichen Klebstoffes (3) an den nach außen weisenden Rändern des Bereiches des ersten Klebstoffes (2),
- Zusammenpressen der zu verbindenden Bauteile und
- Ausreagierenlassen der Klebstoffe (2, 3) bei einer Temperatur von weniger als 50 °C.

2. Verfahren nach Anspruch 1, **dadurch gekennzeichnet, dass** der erste, wasserempfindliche Klebstoff (2) ein Cyanacrylat-Klebstoff ist.

3. Verfahren nach Anspruch 1 oder 2, **dadurch gekennzeichnet, dass** der erste, wasserempfindliche Klebstoff (2) sich farblich vom zweiten, wasserunempfindlichen Klebstoff unterscheidet.

4. Verfahren nach zumindest einem der vorhergehenden Ansprüche, **dadurch gekennzeichnet, dass** der zweite, wasserunempfindliche Klebstoff (3) nicht auf Cyanacrylat basiert.

5. Verfahren nach Anspruch 4, **dadurch gekennzeichnet, dass** der zweite, wasserunempfindliche Klebstoff (3) ausgewählt ist aus der Gruppe bestehend aus Polyurethan-Klebstoffen, Epoxidharz-Klebstoffen, silanvemetzenden Polymerklebstoffen und lösemittelhaltigen Nassklebstoffen mit Polymeren.

6. Verfahren nach zumindest einem der vorhergehenden Ansprüche, **dadurch gekennzeichnet, dass** zumindest eines der zu verbindenden Gummibauteile auf der Verbindungseite angeraut ist.

7. Verfahren nach zumindest einem der vorhergehenden Ansprüche, **dadurch gekennzeichnet, dass** das Ausreagierenlassen ohne zusätzliche Wärmezufuhr erfolgt.

8. Verfahren nach zumindest einem der vorhergehenden Ansprüche, **dadurch gekennzeichnet, dass** Verfahren bei der Kaltrunderneuerung von Fahrzeugreifen eingesetzt wird.

9. Verfahren nach Anspruch 8 **gekennzeichnet durch** zumindest folgende Schritte:
- Entfernen des gesamten Laufstreifens von einem gebrauchten Fahrzeugreifen, so dass die Karkasse (1) mit Wulst, Seitenwand und Gürtel verbleibt,
- Aufbringen eines ersten, wasserempfindlichen Klebstoffes (2) auf den mittleren Bereich der Karkasse (1) oder den mittleren Bereich der Unterseite eines bereits vulkanisierten neuen Laufstreifens (4) über den gesamten Fahrzeugreifenumfang,
- Aufbringen eines zweiten, wasserunempfindlichen Klebstoffes (3) an den radial nach außen weisenden Rändern des Bereiches des ersten Klebstoffes (2),
- Zusammenpressen von Karkasse (1) und Laufstreifen (4) und
- Ausreagierenlassen der Klebstoffe (2, 3) bei Raumtemperatur.

10. Fahrzeugreifen, insbesondere Fahrzeugluftreifen, der nach einem Verfahren gemäß Anspruch 8 oder 9 hergestellt wurde.

## Claims

1. Method of permanently bonding vulcanized rubber components, **characterized by** at least the following steps:
- applying a first, water-sensitive adhesive (2) to at least one region of the rubber components to be bonded,
- applying a second, water-insensitive adhesive (3) to the edges of the region of the first adhesive (2) that point outward,
- pressing the components to be bonded together and
- allowing the adhesives (2, 3) to react to completion at a temperature of less than 50°C.

2. Method according to Claim 1, **characterized in that** the first, water-sensitive adhesive (2) is a cyanoacrylate adhesive.

3. Method according to Claim 1 or 2, **characterized in that** the first, water-sensitive adhesive (2) differs in colour from the second, water-insensitive adhesive.

4. Method according to at least one of the preceding claims, **characterized in that** the second, water-insensitive adhesive (3) is not based on cyanoacrylate.

5. Method according to Claim 4, **characterized in that** the second, water-insensitive adhesive (3) is selected from the group consisting of polyurethane adhesives, epoxy resin adhesives, silane-crosslinking polymer adhesives and solvent-containing wet adhesives with polymers.

6. Method according to at least one of the preceding claims, **characterized in that** at least one of the rubber components to be bonded has been roughened on the bonding side.

7. Method according to at least one of the preceding claims, **characterized in that** the reaction to completion is effected without additional supply of heat.

8. Method according to at least one of the preceding claims, **characterized in that** the method is used in the cold re-treading of vehicle tyres.

9. Method according to Claim 8, **characterized by** at least the following steps:
- removing the entire tread from a used vehicle tyre, leaving the carcass (1) comprising bead, sidewall and belt,
- applying a first, water-sensitive adhesive (2) to the middle region of the carcass (1) or the middle region of the underside of an already vulcanized new tread (4) over the entire circumference of the tyre,
- applying a second, water-insensitive adhesive (3) to the edges of the region of the first adhesive (2) that point radially outward,
- pressing carcass (1) and tread (4) together and
- allowing the adhesives (2, 3) to react to completion at room temperature.

10. Vehicle tyre, especially pneumatic vehicle tyre, produced by a method according to Claim 8 or 9.

## Revendications

1. Procédé de liaison permanente de composants en caoutchouc vulcanisés, **caractérisé par** au moins les étapes suivantes :
- l'application d'un premier adhésif sensible à l'eau (2) sur au moins une zone des composants en caoutchoucs à relier,
- l'application d'un deuxième adhésif insensible à l'eau (3) sur les bords dirigés vers l'extérieur de la zone du premier adhésif (2),
- la compression des composants à relier ensemble et
- le fait de laisser réagir les adhésifs (2, 3) à une température inférieure à 50 °C.

2. Procédé selon la revendication 1, **caractérisé en ce que** le premier adhésif sensible à l'eau (2) est un adhésif cyanoacrylate.

3. Procédé selon la revendication 1 ou 2, **caractérisé en ce que** le premier adhésif sensible à l'eau (2) diffère en couleur du deuxième adhésif insensible à l'eau.

4. Procédé selon au moins l'une quelconque des revendications précédentes, **caractérisé en ce que** le deuxième adhésif insensible à l'eau (3) n'est pas à base de cyanoacrylate.

5. Procédé selon la revendication 4, **caractérisé en ce que** le deuxième adhésif insensible à l'eau (3) est choisi dans le groupe constitué par les adhésifs polyuréthanes, les adhésifs résines époxydes, les adhésifs polymères réticulant au silane et les adhésifs humides contenant des solvants avec des polymères.

6. Procédé selon au moins l'une quelconque des revendications précédentes, **caractérisé en ce qu'**au moins un des composants en caoutchouc à relier est rugosifié sur le côté de liaison.

7. Procédé selon au moins l'une quelconque des revendications précédentes, **caractérisé en ce que** le fait de laisser réagir a lieu sans apport de chaleur supplémentaire.

8. Procédé selon au moins l'une quelconque des revendications précédentes, **caractérisé en ce que** le procédé est utilisé lors du rechapage à froid de pneus de véhicule.

9. Procédé selon la revendication 8, **caractérisé par** au moins les étapes suivantes :
- l'élimination de la totalité de la bande de roulement d'un pneu de véhicule usagé, de manière à ce que la carcasse (1) demeure avec le talon, la paroi latérale et la ceinture,
- l'application d'un premier adhésif sensible à l'eau (2) sur la zone centrale de la carcasse (1) ou la zone centrale du côté inférieur d'une nouvelle bande de roulement déjà vulcanisée (4) sur la totalité de la périphérie du pneu de véhicule,
- l'application d'un deuxième adhésif insensible à l'eau (3) sur les bords radialement dirigés vers l'extérieur de la zone du premier adhésif (2),
- la compression de la carcasse (1) et de la bande de roulement (4) ensemble, et
- le fait de laisser réagir les adhésifs (2, 3) à température ambiante.

10. Pneu de véhicule, notamment pneumatique de véhicule, qui a été fabriqué par un procédé selon la revendication 8 ou 9.
